# EUROPÄISCHE PATENTSCHRIFT

(11) **EP 1 368 945 B1**
(45) Veröffentlichungstag und Bekanntmachung des Hinweises auf die Patenterteilung: **02.08.2017**
(21) Anmeldenummer: 02716696.6
(22) Anmeldetag: 29.01.2002
(51) Int. Cl.: H04L 27/26

(54) **VERFAHREN ZUR FREQUENZ- UND ZEIT-SYNCHRONISATION EINES OFDM-EMPFÄNGERS**
METHOD FOR THE FREQUENCY AND TIME SYNCHRONIZATION OF AN OFDM RECEIVER
PROCEDE DE SYNCHRONISATION DE FREQUENCE ET DE TEMPS D'UN RECEPTEUR OFDM

(30) Priorität: 16.03.2001 DE 10112773
(43) Veröffentlichungstag der Anmeldung: 10.12.2003
(73) Patentinhaber: Rohde & Schwarz GmbH & Co. KG, 81671 München (DE)
(72) Erfinder: BOTT, Rainer, 82346 Andechs (DE); WICKER, Günter, 81927 München (DE); KOROBKOV, Dimitri, 60322 Frankfurt (DE)
(74) Vertreter: Körfer, Thomas
(86) Internationale Anmeldenummer: PCT/EP2002/000906
(87) Internationale Veröffentlichungsnummer: WO 2002/076056

(56) Entgegenhaltungen:
- WO-A-01/03347
- US-A- 5 692 016
- US-A- 6 067 332
- HUNG C-P ET AL: "JOINT FREQUENCY AND SYMBOL SYNCHRONIZATION SCHEMES FOR AN OFDM SYSTEM" WIRELESS PERSONAL COMMUNICATIONS, KLUWER ACADEMIC PUBLISHERS, NL, Bd. 10, Nr. 3, August 1999 (1999-08), Seiten 309-317, XP000831348 ISSN: 0929-6212

## Beschreibung

Die Erfindung betrifft ein Verfahren zur Frequenz- und Zeit-Synchronisation eines Empfängers für den Empfang von OFDM-Signalen, die auf einer festen Trägerfrequenz gesendet werden.

Zur Datenübertragung finden in der modernen Digitaltechnik sogenannte Orthogonal Frequency Division and Multiplexing (OFDM)-Systeme Anwendung. Bei diesem Prinzip wird der digitale Datenstrom vor der Aussendung durch sogenanntes Mapping in komplexwertige Symbole umgewandelt und in eine Vielzahl von Teilsignalen aufgespalten, von denen jedes auf einem gesonderten Träger getrennt übertragen wird. Beim sogenannten DVB-T-(Digital Video Broadcasting)-System werden beispielsweise 1.705 bzw. 6.817 solche Einzelträger benutzt. Im Empfänger werden diese Teilinformationen wieder zu einer Gesamtinformation des senderseitigen digitalen Datenstromes zusammengefaßt. Dieses OFDM-System ist bekannt und wird beispielsweise näher beschrieben in HERMANN ROHLING, THOMAS MAY, KARSTEN BRÜNINGHAUS und RAINER GRÜNHEID, Broad-Band OFDM Radio Transmission for Multimedia Applications, Proceedings of the IEEE, Bd. 87, Nr. 10, Oktober 1999, S. 1778 ff.

Bei solchen System ist es wichtig, daß der Empfänger exakt bezüglich Frequenz und Zeit auf die übertragenen OFDM-Signalblöcke synchronisiert ist. Durch Bewegung von Sender und/oder Empfänger bzw. durch Unterschiede in der Frequenz können Doppler- und Frequenzverschiebungen der einzelnen Träger entstehen. Außerdem ist darauf zu achten, daß der Empfänger auch bezüglich der Zeit exakt auf den Beginn des Orthogonalitätsintervalls der OFDM-Signalblöcke synchronisiert ist. Durch Laufzeitunterschiede beispielsweise in Abhängigkeit von der Entfernung zwischen Sender und Empfänger treffen die OFDM-Signalblöcke nicht immer zur selben Sollzeit am Empfänger ein.

Zur Frequenz- und Zeit-Synchronisation eines solchen OFDM-Empfängers ist es bekannt, zunächst in einem ersten Verfahrensschritt nur einen ungefähren Wert der Frequenz und des Zeitbeginns zu bestimmen und in einem zweiten anschliessenden Verfahrensschritt dann einen genaueren Wert zu ermitteln (HUNG-C-P et al. "JOINT FREQUENCY AND SYMBOL SYNCHRONIZATION SCHEMES FOR AN OFDM SYSTEM" WIRELESS PERSONAL COMMUNICATIONS, KLUWER ACADEMIC PUBLISHERS, NL, Bd. 10, Nr. 3, August 1999 (1999-08), Seiten 309-317, XP000831348 ISSN: 0929-6212). Dabei ist es auch schon bekannt, einen zweidimensionalen Frequenz-Zeit-Suchbetrieb vorzunehmen. Bei diesem bekannten Verfahren wird sowohl beim ersten als auch beim zweiten Verfahrensschritt eine bekannte Datensequenz des empfangenen Signals ausgewertet, was voraussetzt, dass diese Datensequenz bekannt ist. Die Synchronisation nach diesem bekannten Verfahren nimmt relativ viel Zeit in Anspruch, da jeweils die Wiederholung der auszuwertenden Datensequenz abgewartet werden muss.

Dieses bekannte Synchronisationsverfahren unter Ausnutzung bekannter Datensequenzen des Signals wurde auch schon zur reinen Frequenzsynchronisation ohne gleichzeitiger Zeitsynchronisation angewendet (WO 01/03347 A).

Es ist Aufgabe der Erfindung, ein Verfahren zur Frequenz-und Zeit-Synchronisation aufzuzeigen, mit dem ein OFDM-Empfänger schnell und möglichst genau sowohl bezüglich Frequenz als auch bezüglich Zeit auf das empfangene OFDM-Signal synchronisiert werden kann.

Diese Aufgabe wird gelöst durch ein Verfahren laut Hauptanspruch. Vorteilhafte Weiterbildungen ergeben sich aus den Unteransprüchen.

Beim erfindungsgemäßen Verfahren werden in den beiden aufeinanderfolgenden Verfahrensschritten jeweils die zusammen mit den OFDM-Signalen übertragenen Pilottöne ausgewertet, die ständig zur Verfügung stehen, selbst keine Daten übertragen und zusammen mit den übrigen Trägern des OFDM-Signals ständig übertragen werden. Damit kann gemäß der Erfindung wesentlich schneller synchronisiert werden. Durch die zusätzliche Entzerrung des OFDM-Signals gemäß einer Weiterbildung der Erfindung vor der Ermittlung des optimalen Qualitätskriteriums im ersten Verfahrensschritt wird das erfindungsgemäßes Verfahren außerdem wesentlich robuster, es kann in selektiven Fading-Kanälen sinnvoll arbeiten.

Die Erfindung wird im Folgenden anhand schematischer Zeichnungen an Ausführungsbeispielen näher erläutert.

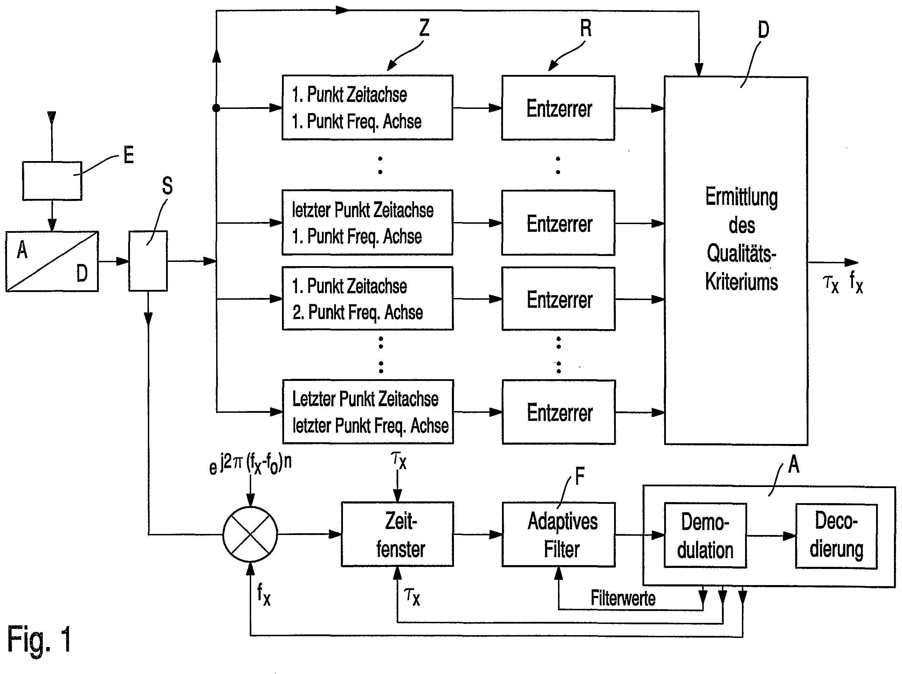

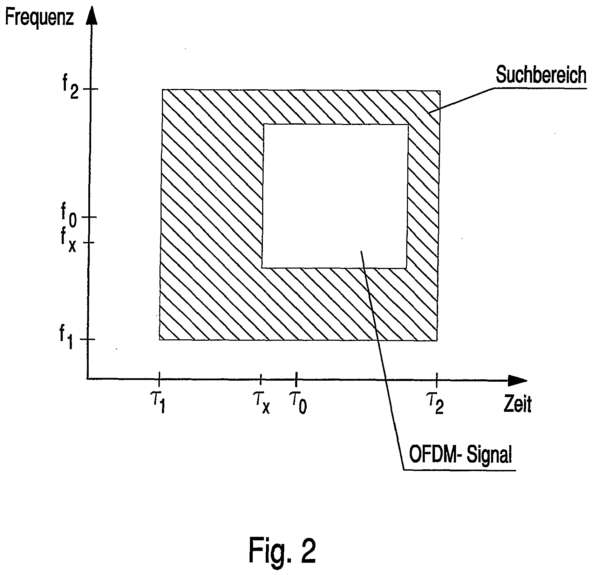

Fig. 1 zeigt das Prinzipschaltbild eines Hochfrequenzempfängers zum Empfang von OFDM-Signalen, die auf einer festen Trägerfrequenz in einem Empfangsteil E empfangen werden. Die Frequenz- und Zeitsynchronisation erfolgt in diesem Ausführungsbeispiel gemäß der ersten Alternative des ersten Verfahrensschrittes, nämlich durch einen zweidimensionalen Frequenz-Zeit-Suchbetrieb. Das empfangene OFDM-Signal wird nach dem analogen Hochfrequenzempfangsteil E in einem Analog/Digital-Wandler A/D digitalisiert und in einem Pufferspeicher S zwischengespeichert. Für die Synchronisation ist eine zweidimensionale Frequenz- und Zeit-Sucheinrichtung Z vorgesehen, mittels welcher während einer zweidimensionalen Suchphase für jeden Abtastwert des A/D-Wandlers in einem vorbestimmten Frequenzbereich f₁ bis f₂, in welchem der nominelle Frequenzwert f₀ des Empfängers liegt, ein frequenzmäßiges Qualitätskriterium des empfangenen OFDM-Blocks bestimmt wird. Die zweidimensionale Suche zeigt schematisch Fig. 2. Zwischen f₁ und f₂ bildet der Frequenz-Suchbereich die eine Dimension des zweidimensionalen Suchbereiches, die andere Dimension bildet ein Zeit-Suchbereich zwischen τ₁ und τ₂ mit dem nominellen Zeitbeginn τ₀ des OFDM-Blocks. In diesem zweidimensionalen Frequenz-Zeit-Suchbereich f₁ bis f₂ bzw. τ₁ bis τ₂ wird für jeden Punkt jeweils ein Qualitätskriterium des empfangenen OFDM-Blocks bestimmt. Die Schrittweite, mit welcher der Frequenzbereich f₁ bis f₂ abgesucht wird, ist abhängig von der Art des OFDM-Signals und dem zu erwartenden maximalen Unterschied zwischen nomineller Frequenzlage f₀ und tatsächlicher Frequenzlage fₓ. Die Schrittweite in der Zeitachse ist bestimmt durch die Abtastrate des A/D-Wandlers, die Schrittweite kann ein Vielfaches eines Abtastwertes betragen. In Fig. 2 ist der gesamte Suchbereich schraffiert dargestellt.

Das empfangene und im Pufferspeicher S in mindestens zwei aufeinanderfolgenden OFDM-Blöcken zwischengespeicherte OFDM-Signal wird im Übertragungskanal mehr oder weniger stark verzerrt. Diese Verzerrungen können Auswirkungen auf die zweidimensionale Suche haben, d. h. durch eine solche Verzerrung kann das Optimum des Qualitätskriteriums verschoben werden. Es ist daher vorteilhaft, das Signal vor der zweidimensionalen Suchauswertung und der Ermittlung des Qualitätskriteriums zu entzerren. Dazu sind gemäß Fig. 1 jeweils Entzerrer R vorgesehen, die der Recheneinheit D zur Ermittlung des Qualitätskriteriums vorgeschaltet sind. Eine Möglichkeit der Entzerrung besteht darin, hierzu die mit dem OFDM-Signal übertragenen Pilottöne auszuwerten, die im Allgemeinen zur Phasensynchronisation für die kohärente Demodulation benutzt werden und im vorliegenden Fall zusätzlich für die Entzerrung eingesetzt werden können. Aufgrund der bekannten Phasenlagen dieser Pilottöne zueinander sowie der bekannten Amplituden können Kanalverzerrungen in bekannter Weise ermittelt werden. Die Entzerrer R enthalten damit Kenntnis über den Phasen- und Amplitudengang des Übertragungskanals zwischen Sender und Empfänger auf der vorgegebenen festen Sendefrequenz und können damit das OFDM-Signal entsprechend entzerren. Dies kann beispielsweise dadurch geschehen, daß jeder OFDM-Träger mit einem komplexen Wert multipliziert wird, der dem Amplituden- und Phasengang des Übertragungskanals entspricht. Wenn die OFDM-Träger nur mittels Phasen- oder Frequenzmodulation moduliert sind, genügt unter Umständen eine Multiplikation mit einem Phasenwert, der als Ergebnis der Schätzung des Phasenganges des Übertragungskanals erhalten wird. Wird der Träger jedoch amplitudenmoduliert, so muß mit dem Inversen des geschätzten Amplitudenganges multipliziert werden (Division). Bei kombinierter Amplituden- und Phasenmodulation, wie dies beispielsweise für höherwertige QAM-Modulationen der Fall ist, muß der betroffene Träger durch den komplexen geschätzten Wert der Übertragungsfunktion des Übertragungskanals dividiert werden.

Das Qualitätskriterium des OFDM-Signals wird während des zweidimensionalen Suchlaufes für jeden Punkt durch Vergleich zwischen dem Eingangssignal (Ausgangssignal des Pufferspeichers S) und dem Ausgangssignal der Entzerrer R im Rechner D ermittelt, d. h. es wird die Distanz berechnet, mit welcher der momentane Frequenzwert vom nominellen Sollwert abweicht. Das Kriterium ist im Allgemeinen die euklidische Distanz, kann jedoch auch der Absolutbetrag der Distanz oder der Betrag der Phasendifferenz der einzelnen Träger sein. Aus den so für jeden Bereichspunkt des zweidimensionalen Suchbereiches ermittelten Qualitätskriterien für Frequenz und Zeit wird der Bereichspunkt mit dem optimalen Qualitätskriterium ermittelt und der Empfänger kann so in einem ersten Verfahrensschritt unter Berücksichtigung der Differenz zwischen nomineller Frequenz und dem Frequenzwert, welcher dem optimalen Qualitätskriterium entspricht, grob synchronisiert werden und es kann auch beginnend mit dem Zeitwert, welcher dem optimalen Qualitätskriterium entspricht, das OFDM-Signal demoduliert und ggf. auch decodiert werden. Da bei diesem ersten Verfahrensschritt jedoch die eigentlichen Werte für Frequenz und Zeit nur annähernd erreicht werden, wird in einem darauf folgenden zweiten Verfahrensschritt, der weiterführende Auswertkriterien benutzt, die eigentliche genaue Frequenz- und Zeitsynchronisation durchgeführt.

Im zweiten folgenden Verfahrensschritt werden die Phasenlagen der Pilottöne ausgewertet, die zusammen mit den OFDM-Signalblöcken übertragen und empfangen werden. Im Demodulator des Empfängers werden für jeden OFDM-Signalblock die Phasen der gleichzeitig übertragenen Pilottöne berechnet. Anschließend werden die Phasen der einzelnen Pilottöne über mehrere aufeinanderfolgende OFDM-Blöcke in geeigneter Weise gemittelt, d. h. gefiltert und geglättet. In einer ersten Stufe werden die auf einem OFDM-Block ermittelten Phasen der Pilottöne unwrapped (unwrapping stellt eine Abbildung der Phasen, die mit Hilfe des Arkustangenz auf dem Intervall -π bis +π errechnet wurde, auf die kontinuierliche Phasenachse dar. Hierbei wird berücksichtigt, daß sich die Phase zwischen OFDM-Blöcken nicht sprunghaft ändert). Jede dieser so projezierten Phasen kann anschließend zur Erhöhung der Meßgenauigkeit mittels eines schmalbandigen Filters gefiltert werden. Als Filter eignen sich eine linearen Regression, sogenannte order statistic filter wie Median-Filter oder PLL-Strukturen.

Die ermittelten Phasenverläufe der einzelnen Pilottöne sind Funktionen des Frequenzoffsets, der durch den Oszillatorversatz zwischen Sender und Empfänger sowie durch Dopplerverschiebungen, hervorgerufen durch die Bewegung von Sender und/oder Empfänger, entstehen oder durch den Versatz des Abtasttaktes zwischen Sender und Empfänger sowie der relativen Lage des Pilottons innerhalb des OFDM-Blocks. Aus diesen Phasenverläufen kann daher der Frequenzoffset und auch der Taktversatz berechnet werden. Auf diese Weise kann im zweiten Verfahrensschritt also über die Mittelung der Phasen der Pilottöne über mehrere OFDM-Blöcke die nominelle Frequenz und der Anfangszeitpunkt der OFDM-Blöcke wesentlich genauer bestimmt werden. Mit diesen Werten wird dann der Empfänger endgültig synchronisiert und auch während der gesamt Sendung nachgeregelt, d. h. während der Sendung wird nur noch dieser zweite Verfahrensschritt unter Ausnutzung der Phasenlage der Pilottöne für die Synchronisation benutzt.

Um bei der Mittelung der Phasenwerte vereinzelt auftretende starke Abweichungen möglichst unberücksichtigt zu lassen, werden die gefilterten Phasenwerte abhängig von einem Qualitätskriterium gewichtet, d. h. stark von den übrigen Werten abweichende Werte werden bei der Mittelung geringer berücksichtigt. Dieses Qualitätskriterium wird multiplikativ mit den jeweiligen Optimalwerten verknüpft und es wird dazu verwendet, um den Wert entweder nur geringer zu bewerten oder überhaupt von der Mittelung auszuschließen. Dieses Kriterium wird vorzugsweise von der Güte der Decodierung des OFDM-Empfängers abgeleitet. Bei solchen OFDM-Empfängern ist oftmals ein sogenannter Maximum-Likelihood-Decoder (ML) vorgesehen der die Eigenschaft besitzt, das er als Ergebnis der Decodierung auch ein Qualitätskriterium liefert. Dieses Kriterium kann unmittelbar für die Wichtung der gefilterten Werte bei der Mittelung benutzt werden. Auch sogenannte APP-Decoder sind für diesen Zweck geeignet, da auch sie ein entsprechendes Qualitätskriterium der empfangenen OFDM-Signale, die sogenannte aposteriori-Wahrscheinlichkeit, liefern. Auch das Ergebnis einer sogenannten CRC-Decodierung ist hierfür als Gütemaß geeignet.

Vor der eigentlichen Demodulation und Decodierung im OFDM-Empfänger A werden die Empfangssignale noch in einem adaptiven digitalen Filter F gefiltert. Dieses adaptive Filter wird über den Demodulator des Empfängers A in seinen Filterwerten gesteuert und ihm werden auch die im Empfänger berechneten Frequenz- und Zeitwerte zugeführt.

Der ermittelte optimale Abtastzeitpunkt und die tatsächliche Frequenz ändern sich während der Übertragung nicht oder nur sehr langsam. Eine langsame Änderung ist z. B. möglich, wenn sich Sender und Empfänger voneinander wegbewegen oder sich nähern. Aufgrund der langsamen Änderungen können diese Werte nachgeführt werden. Hierbei werden die ermittelten optimalen Frequenz- und Zeitwerte im OFDM-Empfänger A über ein adaptives Filter nachgeführt. Hierfür eignet sich besonders ein Kalman-Filter.

Bei Festfrequenzbetrieb des Empfängers kann das adaptive Eingangsfilters F auch mittels sogenannter Decision Feedback (DFE) aktualisiert werden, indem nach der Ermittlung der genauen Frequenz- und Zeitwerte das OFDM-Signal damit demoduliert und decodiert wird und mit Hilfe dieses decodierten OFDM-Signals anschließend eine weitere Kanalschätzung und Entzerrung durchgeführt wird. Über diese DFE wird dann das adaptive Eingangsfilter F nachgeführt.

Aufgrund von Unterschieden der Oszillatoren im Sender und Empfänger können die Taktphasen driften. Als Folge davon wird ohne zusätzliche Maßnahme im Empfänger von Zeit zu Zeit ein Abtastpunkt zu viel oder zu wenig erzeugt. Dies kann entweder dadurch kompensiert werden, daß der Abtasttakt im Empfänger entsprechend nachgeregelt wird, indem beispielsweise der Takt für den A/D-Wandler oder Hauptoszillator, von dem die einzelnen Takte abgeleitet sind, geregelt wird. Eine andere Möglichkeit ist, diese Ablage in Entzerrerfilter durch Phasenverschiebung so lange nachzuregeln, bis die Grenze von einem Abtastpunkt überschritten ist. Bei dieser Grenze wird dann einfach das um einen Abtastzeitpunkt nach vorne oder nach hinten versetzte Signal benutzt.

Im ersten Verfahrensschritt zur groben Ermittlung der Frequenz und des Anfangs der OFDM-Signal kann anstelle des beschriebenen zweidimensionalen Suchvorgangs auch die Auswertung einer vom Sender zu Beginn der Sendung bzw. zyklisch oder auch azyklisch wiederholt ausgesendeten Synchronisationssequenz benutzt werden, wodurch der Synchronisationsvorgang noch weiter vereinfacht wird. Als Synchronisationssequenz eignet sich jedes beliebige bekannte Signal, beispielsweise ein sogenanntes Chirp-Signal, über das im Empfänger unmittelbar die ungefähre nominelle Frequenz und der nominelle Anfangszeitpunkt des OFDM-Signals ermittelt werden kann. Mit diesen Werten wird dann wieder wie in Fig. 1 dargestellt das adaptive Eingangsfilter F entsprechend gesteuert. Die Länge der Impulsantwort der gesamten Übertragungsfunktion (Kanal + Empfangsfilter) soll die Länge des OFDM-Schutzintervalles nicht überschreiten. Die Erzeugung des Filters erfolgt vorzugsweise so, daß ein optimales Wiener sches Filter erzeugt wird. Auch in diesem Fall kann das adaptive Eingangsfilter durch DFE an sich ändernde Ausbreitungsbedingungen angepaßt werden. Der anschließende 2. Verfahrensschritt erfolgt wieder wie oben beschrieben.

## Patentansprüche

1. Verfahren zur Frequenz- und Zeit-Synchronisation eines Empfängers für den Empfang von OFDM-Signalen auf einer festen Trägerfrequenz, bei dem im Empfänger in einem ersten Verfahrensschritt für die zusammen mit den OFDM-Signalen übertragenen Pilottöne über einen zweidimensionalen Frequenz-Zeit-Suchbetrieb und die Ermittlung des Bereichspunktes mit dem optimalen Qualitätskriterium des OFDM-Signals der ungefähre nominelle Wert der Frequenz und des Zeitbeginns des OFDM-Blocks bestimmt wird,
in einem darauffolgendem zweiten Verfahrensschritt im Empfänger die Phase von mindestens einem der zusammen mit dem OFDM-Signal übertragenen Pilottöne bestimmt und über mehrere OFDM-Signalblöcke gemittelt wird und daraus der genauere nominelle Wert der Frequenz- und des Zeitbeginnes des OFDM-Blocks bestimmt wird,
und der Empfänger dann auf diese so bestimmte Frequenz synchronisiert
und das OFDM-Signal beginnend mit dem so ermittelten Anfangszeitwert demoduliert wird.

2. Verfahren nach Anspruch 1,
**dadurch gekennzeichnet,**
**daß** vor der Ermittlung des optimalen Qualitätskriteriums im ersten Verfahrensschritt mit Hilfe der im OFDM-Signal übertragenen Pilottöne die Übertragungsfunktion des Übertragungskanals für jeden Träger des OFDM-Signals geschätzt und in Abhängigkeit davon das OFDM-Signal entzerrt wird.

3. Verfahren nach einem der vorhergehenden Ansprüche, **dadurch gekennzeichnet,**
**daß** während der auf die anfängliche Frequenz- und Zeitsynchronisation folgende Sendezeit kontinuierlich periodisch oder aperiodisch nur noch der zweite Verfahrensschritt zur Synchronisation wiederholt wird.

4. Verfahren nach einem der vorhergehenden Ansprüche, **dadurch gekennzeichnet,**
**daß** am Eingang des OFDM-Empfängers ein adaptives digitales Filter angeordnet ist, das über die im Empfänger berechneten Filterkonstanten gesteuert ist.

5. Verfahren nach Anspruch 4,
**dadurch gekennzeichnet,**
**daß** das adaptive Filter zusätzlich an sich ändernde Ausbreitungsbedingungen des Übertragungskanals angepaßt wird.

6. Verfahren nach einem der vorhergehenden Ansprüche, **dadurch gekennzeichnet,**
**daß** im ersten Verfahrensschritt für jeden Punkt eines zweidimensionalen Frequenz-Zeit-Suchbereiches, der in der einen Dimension bestimmt ist, durch einen die nominelle Frequenz des OFDM-Signals einschließenden Frequenz-Suchbereich und in der anderen Dimension durch einen den nominellen Anfang des OFDM-Signals einschließenden Zeit-Suchbereich ein Qualitätskriterium des OFDM-Signals bestimmt wird,
daraus dann der Bereichspunkt mit dem optimalen Qualitätskriterium des OFDM-Signals ermittelt wird,
und schließlich der Empfänger unter Berücksichtigung der Differenz zwischen nomineller Frequenz und dem dem optimalen Qualitätskriterium entsprechenden Frequenzwert auf die nominelle Frequenz synchronisiert wird und beginnend mit dem dem optimalen Qualitätskriterium entsprechenden Zeitwert das OFDM-Signal demoduliert wird.

7. Verfahren nach einem der vorhergehenden Ansprüche, **dadurch gekennzeichnet,**
**daß** als Qualitätskriterium die Abweichung bzw. die Distanz
zwischen dem Eingang und dem Ausgang eines Entzerrers benutzt wird.

8. Verfahren nach einem der vorhergehenden Ansprüche, **dadurch gekennzeichnet,**
**daß** zu Beginn einer Sendung oder periodisch bzw. aperiodisch während der Sendung vom Sender eine Synchronisationssequenz in Form eines speziellen Bitmusters ausgesendet wird und damit das optimale Qualitätskriterium ermittelt wird.

9. Verfahren nach Anspruch 7,
**dadurch gekennzeichnet,**
**daß** die Entzerrung durch Multiplikation der einzelnen OFDM-Träger mit einem komplexen Wert erfolgt, welcher dem Amplituden- und Phasengang des Übertragungskanals entspricht.

10. Verfahren nach einem der Ansprüche 1 bis 9,
**dadurch gekennzeichnet,**
**daß** die Mittelung der im zweiten Verfahrensschritt berechneten Phasenwerte der Pilottöne durch Filtern und Glätten über mehrere OFDM-Signalblöcke erfolgt.

11. Verfahren nach Anspruch 10,
**dadurch gekennzeichnet,**
**daß** zur Filterung eine lineare Regression benutzt wird.

12. Verfahren nach Anspruch 10,
**dadurch gekennzeichnet,**
**daß** zur Filterung ein order statistic filter, insbesondere ein Median-Filter benutzt wird.

13. Verfahren nach Anspruch 10,
**dadurch gekennzeichnet,**
**daß** zur Filterung eine Phasenregelschleife benutzt wird.

14. Verfahren nach Anspruch 11 bis 13,
**dadurch gekennzeichnet,**
**daß** die berechneten Phasenwerte in Abhängigkeit von einem Qualitätskriterium der OFDM-Signale gewichtet werden und bei der Mittelung entsprechend gewichtet berücksichtigt werden.

15. Verfahren nach Anspruch 14,
**dadurch gekennzeichnet,**
**daß** als Wichtungskriterium die Güte des Decodierergebnisses im Empfänger benutzt wird.

16. Verfahren nach einem der vorhergehenden Ansprüche,
**dadurch gekennzeichnet,**
**daß** im Demodulator des Empfängers ein zusätzliches adaptives Filter, insbesondere ein Kalman-Filter, vorgesehen ist, durch welches langsame Änderungen ausgeregelt werden.

17. Verfahren nach einem der vorhergehenden Ansprüche,
**dadurch gekennzeichnet,**
**daß** nach der Ermittlung der genaueren Werte für Frequenz und Anfang der OFDM-Signale diese demoduliert und decodiert werden und mit Hilfe dieses decodierten OFDM-Signals anschließend eine weitere Kanalschätzung und Entzerrung des OFDM-Signals durchgeführt wird.

18. Verfahren nach einem der vorhergehenden Ansprüche,
**dadurch gekennzeichnet,**
**daß** der Abtasttakt im Empfänger durch Regeln des Hauptoszillators, des Abtasttaktes des A/D-Wandlers oder durch Phasenverschiebung im Empfangsfilter mit dem senderseitigen Abtasttakt synchronisiert wird.

## Claims

1. Method for frequency and time synchronisation of a receiver for receiving OFDM signals on a fixed carrier frequency, in which, in the receiver, in a first procedural step, for the pilot tones transmitted together with the OFDM signals, the approximate nominal value for the frequency and time origin of the OFDM block is determined via a two-dimensional frequency-time search mode and by determining the area point with the optimum quality criterion of the OFDM signal,
in a second, subsequent procedural step in the receiver, the phase of at least one of the pilot tones transmitted together with the OFDM signal is determined and averaged across several OFDM signal blocks and the more exact nominal value for the frequency and time origin of the OFDM block is determined from this,
and the receiver is then synchronised to this frequency determined in the above manner,
and the OFDM signal is demodulated starting with the time-origin value determined in this manner.

2. Method according to claim 1,
**characterised in that**,
before the determination of the optimum quality criterion, in the first procedural step, the transmission function of the transmission channel is estimated for every carrier of the OFDM signal using the pilot tones transmitted in the OFDM signal, and the OFDM signal is equalised in dependence upon this.

3. Method according to either of the preceding claims,
**characterised in that**
during the transmission time following the initial frequency and time synchronisation, only the second step of the synchronisation procedure is repeated either continuously, periodically or aperiodically.

4. Method according to any one of the preceding claims,
**characterised in that**
an adaptive digital filter, which is controlled via the filter constants calculated in the receiver, is disposed at the input of the OFDM receiver.

5. Method according to claim 4,
**characterised in that**
the adaptive filter is additionally adapted to changing propagation conditions of the transmission channel.

6. Method according to any one of the preceding claims,
**characterised in that**,
in the first procedural step, a quality criterion of the OFDM signal is determined for every point of a two-dimensional frequency-time search range which is determined in one dimension by a frequency search range including the nominal frequency of the OFDM signal, and in the other dimension by a time-search range including the nominal origin of the OFDM signal,
the area point with the optimum quality criterion of the OFDM signal is then determined from this, and, finally, the receiver is synchronised to the nominal frequency, taking into consideration the difference between the nominal frequency and the frequency value corresponding to the optimum quality criterion, and the OFDM signal is demodulated starting with the time value corresponding to the optimum quality criterion.

7. Method according to any one of the preceding claims,
**characterised in that**
the deviation or the distance between the input and the output of an equaliser is used as the quality criterion.

8. Method according to any one of the preceding claims,
**characterised in that**,
at the start of a transmission or periodically and/or aperiodically during the transmission, a synchronisation sequence in the form of a special bit pattern is transmitted by the transmitter, and the optimum quality criterion is thus determined.

9. Method according to claim 7,
**characterised in that**
the equalisation is carried out by multiplication of the individual OFDM carriers with a complex value, which corresponds to the amplitude and phase response of the transmission channel.

10. Method according to any one of claims 1 to 9,
**characterised in that**
the averaging of the phase values of the pilot tones calculated in the second procedural step is carried out by filtering and smoothing across several OFDM signal blocks.

11. Method according to claim 10,
**characterised in that**
a linear regression is used for filtering.

12. Method according to claim 10,
**characterised in that**
an order statistic filter, especially a median filter, is used for filtering.

13. Method according to claim 10,
**characterised in that**
a phase-control loop is used for filtering.

14. Method according to claim 11 to 13,
**characterised in that**
the calculated phase values are weighted in dependence upon a quality criterion of the OFDM signals and taken into account in the averaging in an appropriately weighted manner.

15. Method according to claim 14,
**characterised in that**
the quality of the decoding result in the receiver is used as the weighting criterion.

16. Method according to any one of the preceding claims,
**characterised in that**
an additional adaptive filter, by means of which slow changes can be compensated, especially a Kalman filter, is provided in the receiver demodulator.

17. Method according to any one of the preceding claims,
**characterised in that**,
after determining the more exact values for frequency and origin of the OFDM signals, these are demodulated and decoded, and using this decoded OFDM signal, a further channel estimation and equalisation of the OFDM signal is then performed.

18. Method according to any one of the preceding claims,
**characterised in that**
the scanning cycle in the receiver is synchronised with the transmitter scanning cycle by controlling the main oscillator or the scanning cycle of the A/D-converter, or by phase displacement in the receiver filter.

## Revendications

1. Procédé de synchronisation de fréquence et de temps d'un récepteur destiné à recevoir des signaux OFDM sur une fréquence porteuse fixe, selon lequel, dans le récepteur,
on détermine, au cours d'une première étape de procédé, pour les signaux pilotes transmis conjointement avec les signaux OFDM, la valeur nominale approximative de la fréquence et de l'origine des temps du bloc de signaux OFDM, via un mode de recherche fréquence-temps bidimensionnel et la détermination du point de la région à critère de qualité optimale des signaux OFDM,
au cours d'une deuxième étape de procédé lui faisant suite, la phase d'au moins l'un des signaux pilotes transmis conjointement avec les signaux OFDM est déterminée dans le récepteur et est prise en moyenne sur plusieurs blocs de signaux OFDM, et on détermine, à partir du résultat précédent, la valeur nominale plus exacte de la fréquence et de l'origine des temps du bloc de signaux OFDM,
et le récepteur est alors synchronisé à la fréquence ainsi déterminée
et le signal OFDM est démodulé en commençant par la valeur de l'origine des temps ainsi déterminée.

2. Procédé selon la revendication 1,
**caractérisé**
**en ce qu'**avant la détermination du critère de qualité optimale au cours de la première étape de procédé, la fonction de transmission du canal de transmission pour chaque porteur du signal OFDM est estimée et le signal OFDM est égalisé en fonction du résultat précédent à l'aide des signaux pilotes transmis dans le signal OFDM.

3. Procédé selon l'une quelconque des revendications précédentes,
**caractérisé**
**en ce que** pendant le temps d'émission faisant suite à la synchronisation de fréquence et de temps initiale, il ne reste plus qu'à répéter en continu de manière périodique ou apériodique la deuxième étape de procédé pour la synchronisation.

4. Procédé selon l'une quelconque des revendications précédentes,
**caractérisé**
**en ce qu'**un filtre numérique adaptatif, qui est commandé par les constantes de filtre calculées dans le récepteur, est agencé à l'entrée du récepteur OFDM.

5. Procédé selon la revendication 4,
**caractérisé**
**en ce que** le filtre adaptatif est adapté en outre aux conditions variables de propagation du canal de transmission.

6. Procédé selon l'une quelconque des revendications précédentes,
**caractérisé**
**en ce qu'**au cours de la première étape de procédé, pour chaque point d'une zone de recherche fréquence-temps bidimensionnelle, qui est déterminé dans l'une des dimensions, un critère de qualité du signal OFDM est déterminé par une zone de recherche de fréquence comprenant la fréquence nominale du signal OFDM et dans l'autre dimension par une zone de recherche de temps comprenant l'origine nominale du signal ODFM,
à partir du résultat précédent, le point de la région à critère de qualité optimale du signal OFDM est déterminé,
et pour finir le récepteur est synchronisé à la fréquence nominale en prenant en considération la différence entre la fréquence nominale et la valeur de fréquence correspondant au critère de qualité optimale et le signal OFDM est démodulé en commençant par la valeur de temps correspondant au critère de qualité optimale.

7. Procédé selon l'une quelconque des revendications précédentes,
**caractérisé**
**en ce que** l'écart ou la distance entre l'entrée et la sortie d'un égaliseur est utilisé(e) comme critère de qualité.

8. Procédé selon l'une quelconque des revendications précédentes,
**caractérisé**
**en ce qu'**au début d'une émission ou de manière périodique ou apériodique pendant l'émission par l'émetteur, une séquence de synchronisation prenant la forme d'une configuration binaire spéciale est émise, ce qui permet de déterminer le critère de qualité optimal.

9. Procédé selon la revendication 7,
**caractérisé**
**en ce que** l'égalisation est réalisée par multiplication des différents porteurs OFDM et d'une valeur complexe correspondant à la réponse d'amplitude et de phase du canal de transmission.

10. Procédé selon l'une des revendications 1 à 9,
**caractérisé**
**en ce que** le calcul de la moyenne des valeurs de phase des signaux pilotes calculées au cours de la deuxième étape de procédé est réalisé par filtrage et lissage sur plusieurs blocs de signaux OFDM.

11. Procédé selon la revendication 10,
**caractérisé**
**en ce qu'**une régression linéaire est utilisée pour la filtration.

12. Procédé selon la revendication 10,
**caractérisé**
**en ce qu'**un filtre de statistique d'ordre, en particulier un filtre médian, est utilisé pour la filtration.

13. Procédé selon la revendication 10,
**caractérisé**
**en ce qu'**une boucle à verrouillage de phase est utilisée pour la filtration.

14. Procédé selon l'une des revendications 11 à 13,
**caractérisé**
**en ce que** les valeurs de phase calculées sont pondérées en fonction d'un critère de qualité des signaux OFDM et sont prises en compte en étant pondérées de manière correspondante lors du calcul de la moyenne.

15. Procédé selon la revendication 14,
**caractérisé**
**en ce que** la qualité du résultat du décodage dans le récepteur est utilisée comme critère de pondération.

16. Procédé selon l'une quelconque des revendications précédentes,
**caractérisé**
**en ce qu'**un filtre adaptatif supplémentaire, en particulier un filtre de Kalman, par l'intermédiaire duquel des modifications lentes sont régulées, est prévu dans le démodulateur du récepteur.

17. Procédé selon l'une quelconque des revendications précédentes,
**caractérisé**
**en ce qu'**après la détermination des valeurs plus exactes pour la fréquence et l'origine des signaux OFDM, ceux-ci sont démodulés et décodés et une autre estimation de canal et une autre égalisation du signal OFDM sont réalisées à l'aide de ce signal OFDM décodé.

18. Procédé selon l'une quelconque des revendications précédentes,
**caractérisé**
**en ce que** l'horloge d'échantillonnage dans le récepteur est synchronisée dans le filtre de réception avec l'horloge d'échantillonnage côté émetteur par régulation de l'oscillateur principal, de l'horloge d'échantillonnage du convertisseur analogique/numérique ou par décalage de phase.
